(19) **Europäisches Patentamt**

**European Patent Office**

**Office européen des brevets**

(11) Veröffentlichungsnummer: **0 331 790**
**A2**

(12) **EUROPÄISCHE PATENTANMELDUNG**

(21) Anmeldenummer: 88109777.8

(22) Anmeldetag: 02.08.88

(51) Int. Cl.⁴: **B60R 16/02 , B60Q 7/00 , F21L 11/00**

(30) Priorität: 11.03.88 DE 3808206

(43) Veröffentlichungstag der Anmeldung:
**13.09.89 Patentblatt 89/37**

(84) Benannte Vertragsstaaten:
**AT BE CH DE ES FR GB GR IT LI LU NL SE**

(71) Anmelder: **Neubauer, Rudi**
**Dörrersgasse 12**
**D-8500 Nürnberg(DE)**

(72) Erfinder: **Neubauer, Rudi**
**Dörrersgasse 12**
**D-8500 Nürnberg(DE)**

(54) **Aku-Lampe als Autolampe und mit Autozubehör und Notstartbatterie.**

㊗ Eine kleine Aku-Batterie plastikummantelt als Lampe ins Auto, auch Silberbatterie, da noch kleiner. Zugleich Notstartbatterie zum Beispiel gewärmt usw. ladenlassen, mit 2 Steckdosen für Autozubehör zum Beispiel Halogenlampe und 2 Pole vorne für Klemmen zugänglich zum Laden zum Beispiel an Tankstelle und zum Überbrücken. Außerdem gelbes Blinklicht und weißes Lichtoben o. beliebiges Desighn. Starten über Zigarettenanzünder bzw. Autosteckdose. Gutes Kabel also zur Autosteckdose und Autoanlasser und gutes Kabel zur Akulampe.

Lampe mit griff und Schlaufe um die Schulter. 30 Watt Lampe oder stärkere Lampe oder Halogenlampe umschaltbar hell und weniger hell.

Kabel von Lampe zur Autosteckdose seperat direkt in Spezialsteckdose dafür der Lampe stecken.

Aku-Lampe so stark, daß man bei leerer Hauptbatterie damit starten kann, soviel Silber evtl. oder andere technische Methode.

Lampe mit Reflektor und weißem Licht nach vorne und nach hinten Reflektor mit gelbem Blinklicht. Oder beliebig in der Form und Ausstattung oder ohne Lampe f.Zubehör.

Bei Silberbatterie ist Form und Austattung beliebig, da Silberbatterie sehr klein sein Ksnn, auch viele Varianten zum Autostarten ausgelegt

Man kann Aku-Lampe auch vollständig in Autosteckdose steckenlassen, damit sie geladen wird und ständig beim Anlassen mithilft. Außerdem kann mann sie zur Tankstelle zum laden geben.

Auch als 6 Volt Ausführung vorgesehen mit kleinem Transformator.

Erfindung Nr.2
Aku-Lampe
Maßstab 1:1

6,8cm

7cm

Reflektor

8cm

9cm

4cm

Pol

12cm

9cm

Aku-Lampe Modell 1, 3, 4, 6
Vorne weißes Licht, ninten oranges Licht
die beiden Pole mit Plastikkappen aogedeckt.

Schultertragegurt

Erfindung Nr.2
Aku-Lampe
Maßstab 1:1

38cm

4cm

Reflektor

Pol 16mmØ

12cm

89cm

Aku-Lampe Modell 5

Breite U=9cm, O=8cm, Länge 25cm=12V, Länge 20cm=6V
Strahler umschaltbar auf orange/weiß
oder hinten orange Reflektor m.Blinklicht, dann Steckdosen
seitlich links bei Zeichnung oben, sonst hinten oben.

## Aku-Lampe und zugleich Notstartbatterie mit all deren Möglichkeiten, ein leichtes handliches Batterie-Aku in Lampe integriert.

Die Erfindung betrifft auf dem Gebiet der Autoelektronik wiederaufladbare Batterie-Akus und deren Möglichkeiten. Durch eine neue Technische Methode sind die Akus verbessert damit die Maße kleiner werden.

Die Erfindung ist ein Batterie-Aku u.a. als Lampe und mit Blinklicht mit den Möglichkeiten von elektronischen Autozubehör, 12V-Werkzeug, Autostaubsauger z.B. im Wochenendhaus und 12V-Verbraucher aller Art, vor allem auch Notstartbatterie.

Ein leichtes handliches Batterie-Aku in Lampe integriert, die größeren Ausführungen sind schwerer.

Diese Aufgabe wird erfindungsmäßig gelöst wie folgt. Von der Akulampe werden im Verkauf größere und kleinere Varianten angeboten. Die kleineren Varianten dienen u.a. als Notstartbatterie und wenn man will ständig zum mitladen und mitstarten. Die größeren Aku-Lampen können an Stelle der Hauptbatterie im Motorraum untergebracht werden. Mit Griff und Schlaufe daran leicht transportierbar und leicht herausnehmbar z.B. für Heimladegerät, oder nur zum Aufwärmen im Winter oder zum Laden zur Tankstelle. Als Energiequelle für 12V-Werkzeug ist sie überdimensioniert und als Alternative von allen bisherigen kabellosen Akuwerkzeug. Zu diesem Zweck sind große und kleine Steckdosen angebracht. Ebenso ist die Akulampe für Autostaubsauger 12V im Wochenendhaus ideal. Auch 12V Kühlschrank-Box und 12V Klimaanlage kann sie antreiben. Für alle 12V Verbraucher sehr gut geeignet.

Damit im Auto bei ständigen Anschluß der Zigarettenanzünder frei bleibt empfehle ich eine Autosteckdose im verlegen lassen. Von Klimaanlage abgesehen kann auch die kleine Akulampe genommen werden.

Besonders schön ist die Möglichkeit elektrische Autolampen und Fernscheinwerfer unabhänig vom Auto anschliessen zu können z.B. für Höhlenwanderungen usw..

Das Aku ist in einer Lampe integriert mit gelbem Blinklicht und weißem Licht in jeden Helligkeitsgrad, auch mit sehr starken 75W Halostrahlern u.a..

Die Aku-Lampe ist zugleich Notstartbatterie und startet im intakten Zustand bei leerer Hauptbatterie das Auto, obwohl sie leicht und handlich ist durch eine neue Technische Methode oder Silberbeimischung.

Die Verwendung von elektrischen Autozubehör bietet sich von selbst an z.B. Autowärmkissen unter den Mantel im katem Winter, 12V-Föhn, Elektroheizungen,Glühbirnen als Handwärmer, Ventilator, Gebläse, Röhrenheizer usw..

Die größeren Aku-Lampen-Modelle dienen auch als Notstartbatterie für V12-Zylindermotoren. Bei leerer Hauptbatterie und intakter Aku-Lampe springen diese Motoren immer an. Bei einem Heimladegerät kann auch hier überhaupt nichts passieren, die Aku-Lampe ist immer frisch geladen. Bei den kleinen Aku-Lampen tut es auch ein Bastler-Transformator 12-18V mit Gleichrichter ergänzt.

Die vorgeschlagene Aku-Lampe ist ein plastikummanteltes kleineres Batterie-Aku, hermetrisch gegen Auslaufen gesichert, auch bei Umstürzen. Durch die neue Technische Methode, sonst Silberbeimischung sind die Maße reduziert. Zugleich dient die Akulampe als Notstartbatterie, die größeren Ausführungen können richtig als Starterbatterie eingesetzt werden. Vorne im Motorraum befestigen, an Stelle der Autobatterie.

Das ganze ist mit mehreren Steckdosen für Autozubehör ausgestattet, z.B. für Halogenfernscheinwerfer, Autowärmkissen unter die Kleidung im Winter usw.. Für Handwerker steht die 12V/6V Energiequelle für 12V/6V Werkzeug zur Verfügung z.B. mini-kraft usw. Bohrmaschinen, Sägen, Schleifmaschinen, Schleifscheiben usw.. Für alle 12V/6V Verbraucher stehen die Aku-Lampen bereit. Vorne 2 Pole für klemmen zugänglich zum Laden, z.B. an Tankstelle, Heimladegerät, und zum Überbrücken. Ich empfehle jeden einen kleinen ergänzten Transformator mit Gleichrichter zum laden (Spielzeugeisenbahn, mini-kraft usw.).

Die Aku-Lampe mit weißen Licht, umschaltbar auf orange Blinklicht oder getrennt, beliebig in Designh, siehe beiliegende Zeichungen.

Das Auto-Aku auch ohne Lampe für Autozubehör, 12V/6V Werkzeug, alle 12V/6V Verbraucher.

Starten über Zigarettenanzünder oder Autosteckdose, also gutes Kabel zur Autolampe. Ich empfehle die Verlegung einer Autosteckdos für die Aku-Lampe, damit der Zigarettenanzünder frei ist.

Lampe mit Handgriff und Schlaufe um die Schulter in dieser Ausführung.

Zum Kartenlesen im Auto empfehle ich 30W Lampe, sonst 45W Lampen oder Halolampen.

Auflade- und Startkabel von Autolampe zur Autosteckdose seperat direkt in Spezialsteckdose der Lampe stecken.

Aku-Lampe so stark, daß man bei leerer Hauptbatterie und intakter Aku-Lampe damit starten kann, es gibt auch größere Modelle, bei allen bessere Technische Methode und bessere Technische Qualität.

Man kann die Aku-Lampe auch vollständig in der Autosteckdose stecken lassen, damit sie ständig geladen wird und ständig beim Anlassen mithilft. Außerdem kann man sie zur Tankstelle zum laden geben bzw. Heimladegerät. Auch als 6V Ausführung vorgesehen mit kleinem Transformator bei 12V Auto.

Die Zeichnungen betreffend handelt es sich bei allen Maßen um vorgeschlagene Maße, sie können nach Belieben geändert werden Auch Leistungsangaben sind nach Belieben abänderbar.

Ich habe selbst Versuche mit kleinen Batterie-Akus gemacht. Die herkömmlichen kleinen Batterie-Akus sind im Autoinnern als Notstartbatterie ungeeignet, weil sie bei Umkippen auslaufen können, außerdem sind sie ohne Lampe. Auch für Autozubehörelektrik ist nichts daran, ebenso fehlt der Anschluß für 12V Verbraucher, außer Pole. Außerdem fehlen Handgriff und Schlaufe. Der unerfahrene Elektronik-Bastler kann versehentlich die Autoelektrik beschädigen.

Die Erfindung ist ein leicht transportables Batterie-Aku mit Lampe daran mit all ihren Möglichkeiten. Der Erfindung liegt die Aufgabe zu Grunde ein auslaufsicheres Batterie-Aku in Form einer Lampe für Autozubehör und 12V Werkzeug und 12V Verbraucher anzubieten. Außerdem soll sie als Notstartbatterie zur Verfügung stehen, größere Varianten auch als Hauptbatterie.

Diese Aufgabe wird bei einer Gattungsmäßigen Einrichtung durch die kennzeichnenden Merkmale des Anspruchs 1 gelöst.

Diese Aufgabe wird erfindungstechnisch gelöst wie Folgt. Das Batterieaku ist hermetrisch gegen Auslaufen abgesichert, auch im umgestürzten Zustand.

Die Lampe ist im Designh integriert, Reflektor seitlich oder vorne, größer oder kleiner, verschiedene Lampenstärken zur Auswahl. Mit dem ebenfalls integrierten orangenen Blinklicht ist sie alternativ zu bisherigen Autolampen. An allen Aku-Lampen sind Autosteckdosen angebracht, also für sämtliche 12V-Verbraucher verwendbar. Außerdem 1 spezielle Steckdose zum Aufladen. 2 Batterie-Pole sind durch abnehmbare Plastikkappen abgedeckt, dient zum Ladenlassen Tankstelle oder Heimladegerät.

Die Aku-Lampe ist leicht und handlich, mit Griff und Schlaufe versehen und völlig ungefährlich für die Autoelektrik. Die Aku-Lampe ist so stark ausgelegt, daß sie im intaktem Zustand die jeweilige Wagenklasse anwirft bei leerer Hauptbatterie. Die größeren Modelle Als Ersatz der Hauptbatterie in den Motorraum.

Ich empfehle eine Autosteckdose mit gutem Kabel im Auto damit Hauptsteckdose nicht ständig belegt ist. An der Aku-Lampe können elektrische Autolampen und starke Fernscheinwerfer angeschlossen werden, dadurch mobil.

Die mit der Erfindung erzielten Vorteile bestehen u.a. darin, daß die Batterie zum Laden herausgenommen werden kann, während sich sich die Hauptbatterie noch im Auto befindet. Die Batterie-Lampe ist klein und handlich, frei von Schmutz, dreck und Öl. Als Lampe ist sie phänomenal hell auf Wunsch, bzw. Autozubehör Halogenfernscheinwerfer. Die Aku-Lampe ist zugleich Notstartbatterie mit all deren Möglichkeiten. Durch die Kombination Lampe und Aku doppelt und vielfach verwendbar.

Durch das gelbe Blinklicht neben weißen Licht eine Alternative für bisherige Autolampen.

Die Autosteckdosen an der Aku-Lampe erweitern deren Einsetzbarkeit sehr stark z.B. Autozubehör, Autostaubsauger, 12V-Werkzeug usw..

Vor allem als Notstartbatterie ist sie gedacht, für 12-Zylinder die größeren Varianten.

Die größeren Varianten können auch Als Ersatz der Hauptbatterie im Motorraum an deren Stelle befestigt werden, Vorteil leicht herausnehmbar, wesentlich leichter, mit Griff und Schlaufe.

Für 12V-Werkzeug ideal geeignet als Alternative bisheriger kabelloser Akumaschinen.

Als Energiequelle im Wochenendhaus z.B. Autostaubsauger, Kühlschrank-box 12V und natürlich auch Elektrowerkzeug. Mit Transformator können schwächere 22oV Geräte betrieben werden.

Als Energiequelle für alle 12V-Verbraucher. Ich empfehle eine Autsteckdose mit gutem Kabel im Auto anbringen zu lassen, daß der Zigarettenanzünder frei wird.

Mehrere Ausführungsbeispiele der Erfindung sind in Zeichnungen dargestellt und werden im Folgendem näher beschrieben, siehe Zeichnungen.

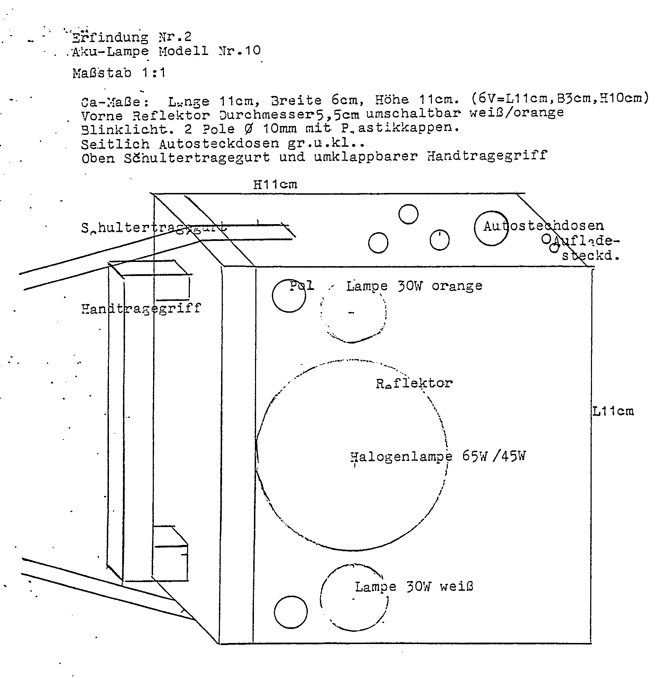

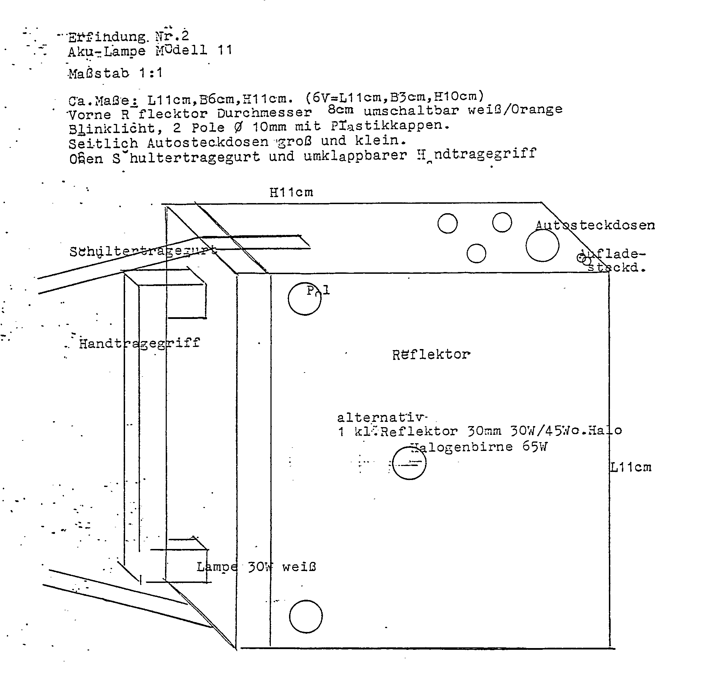

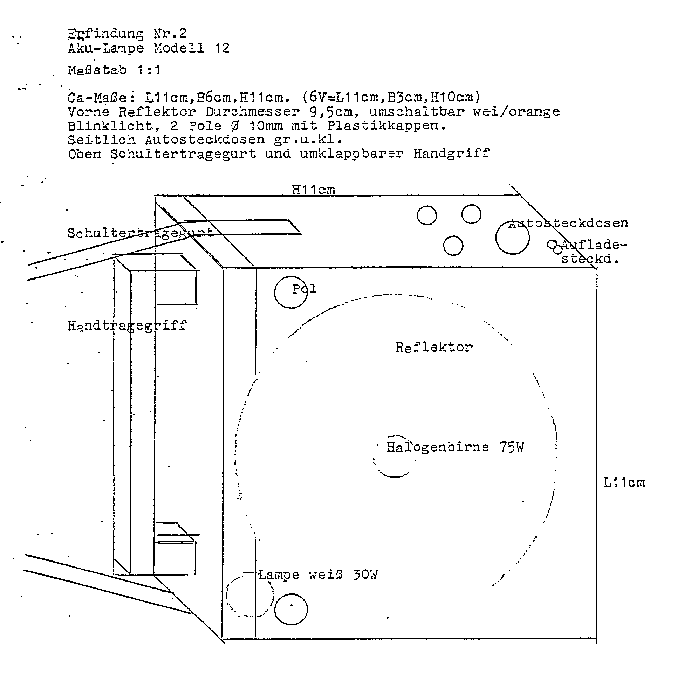

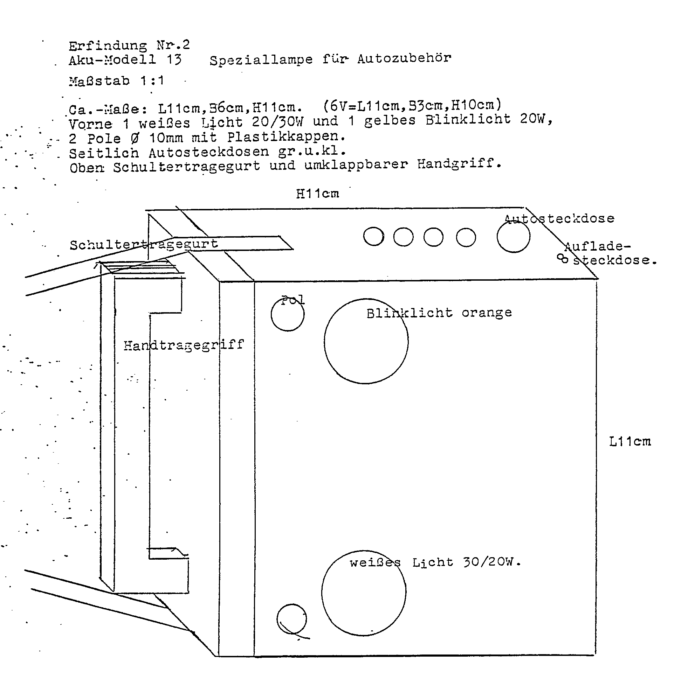

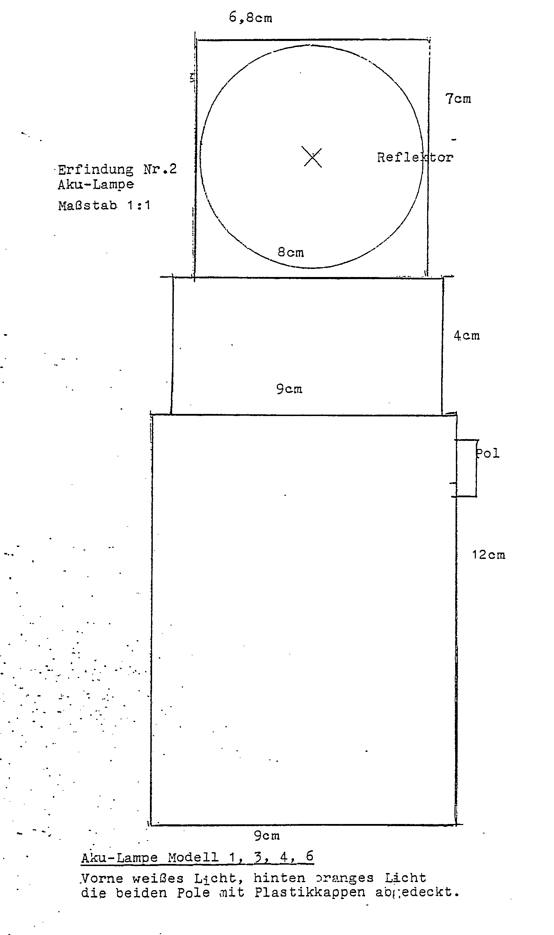

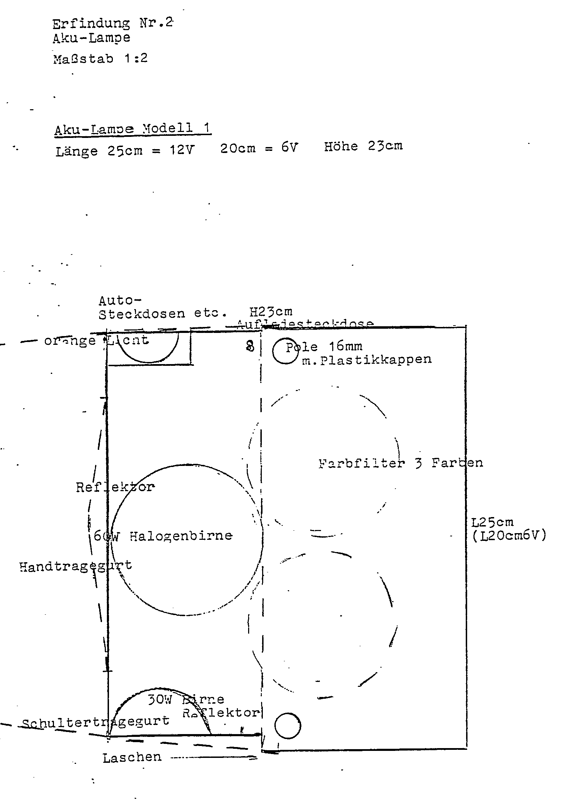

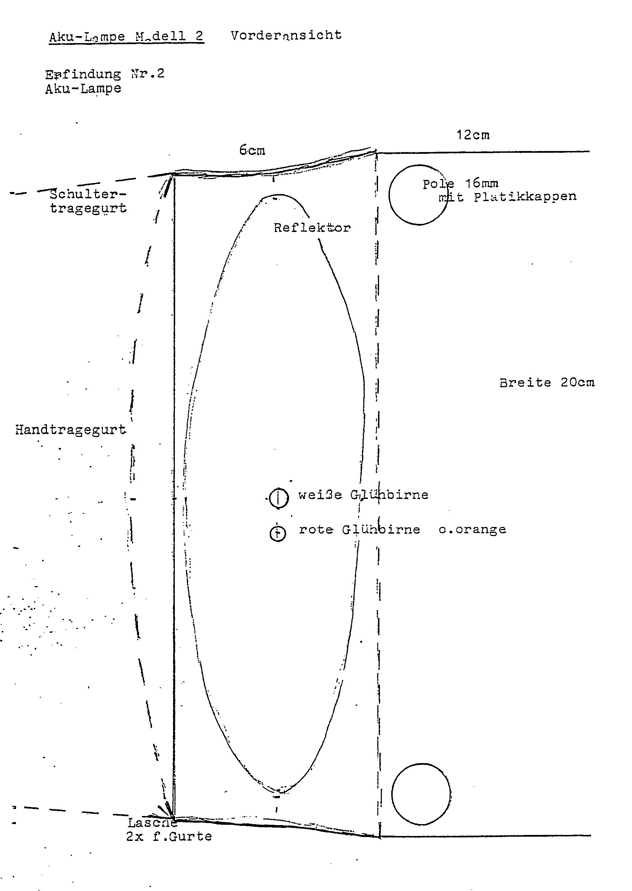

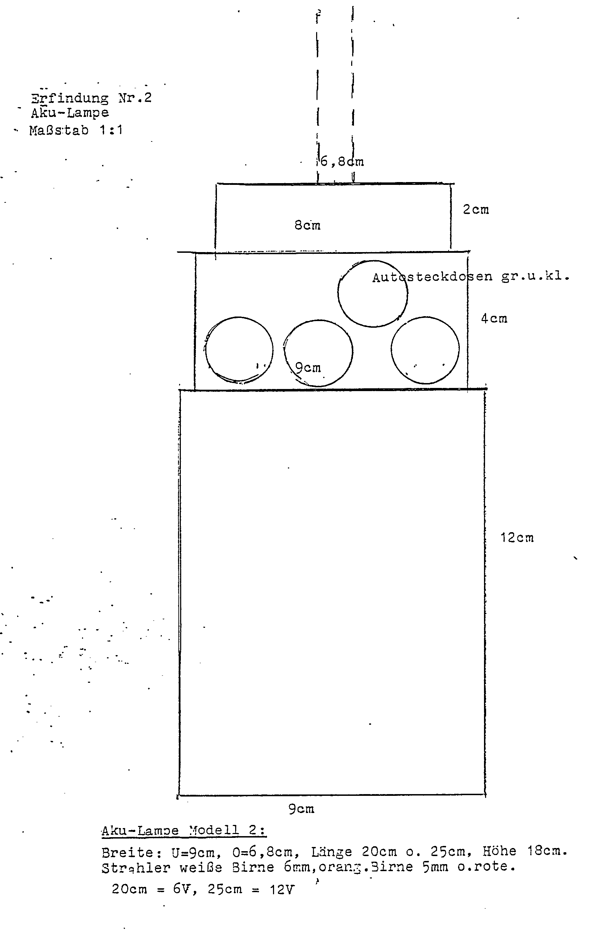

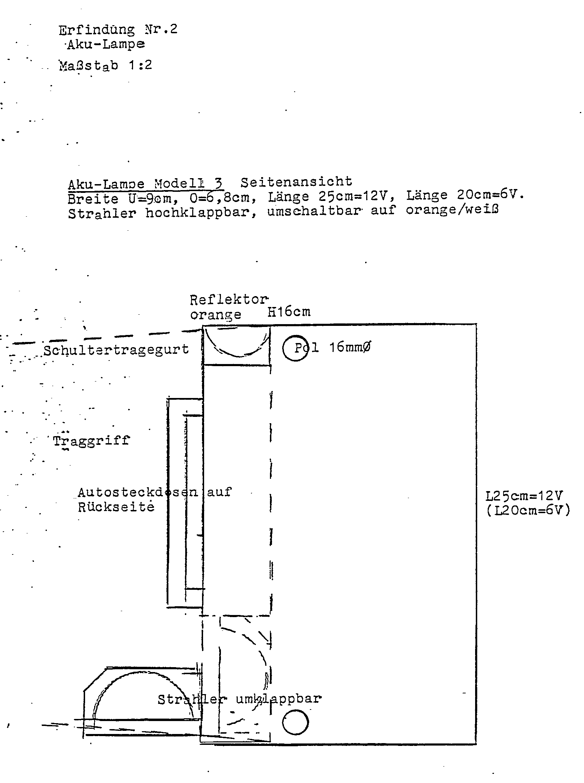

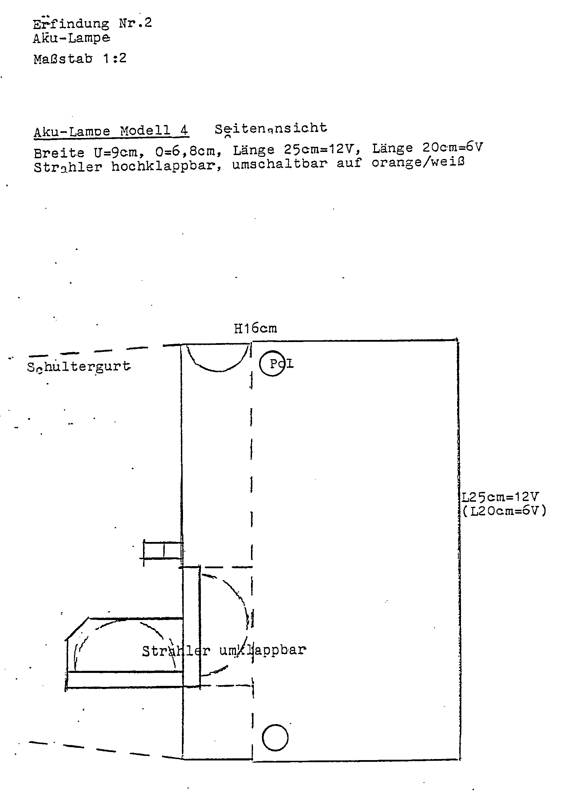

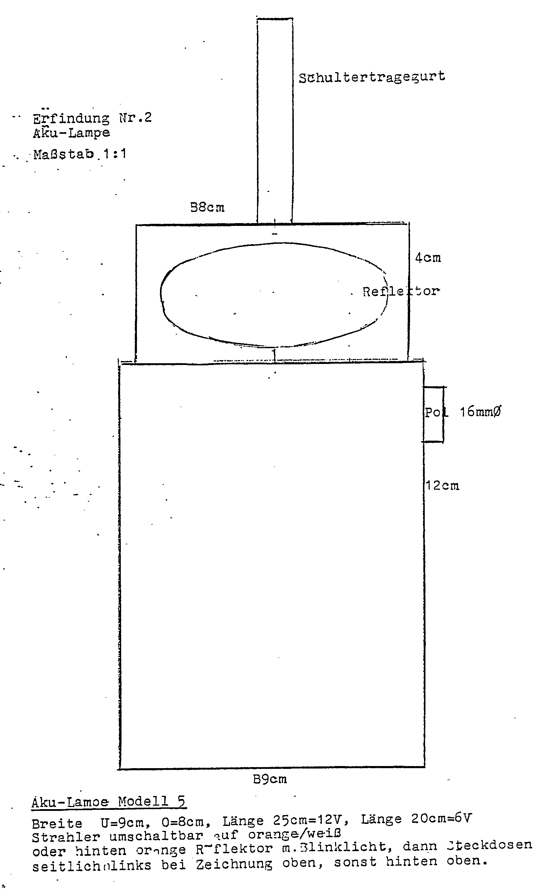

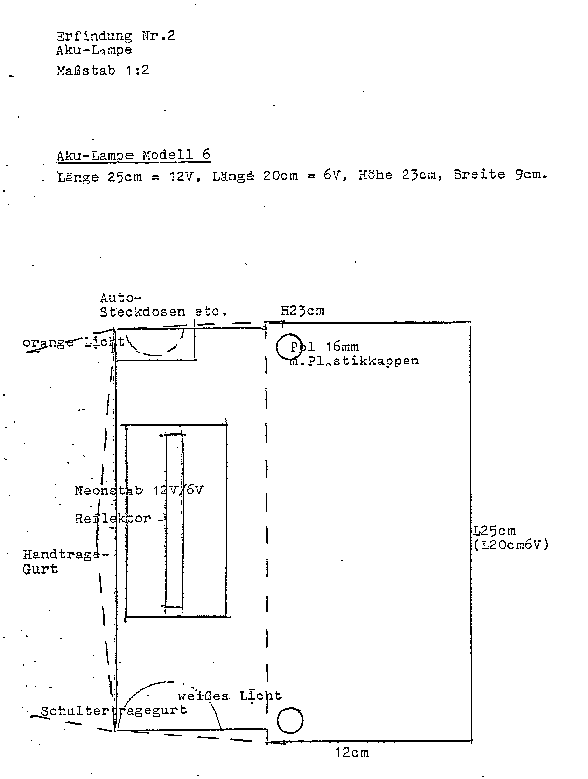

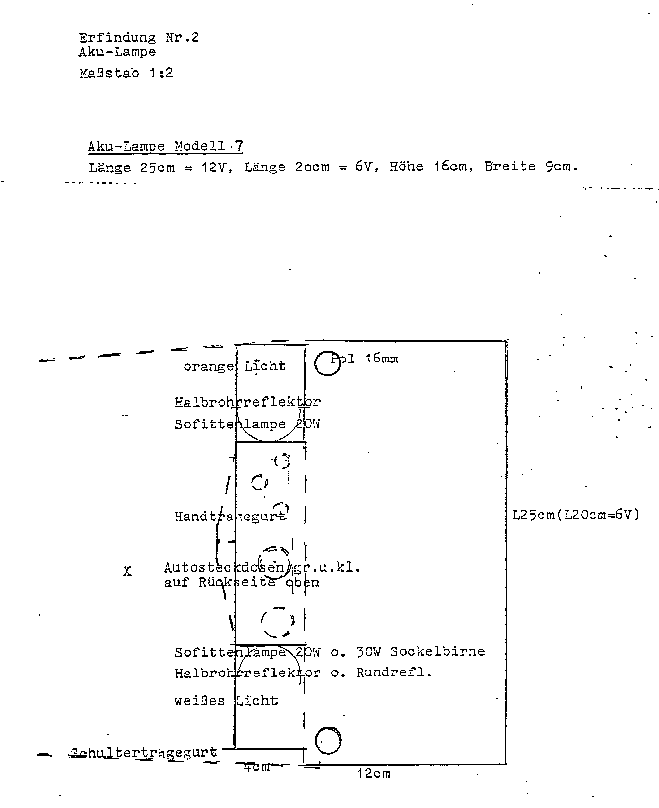

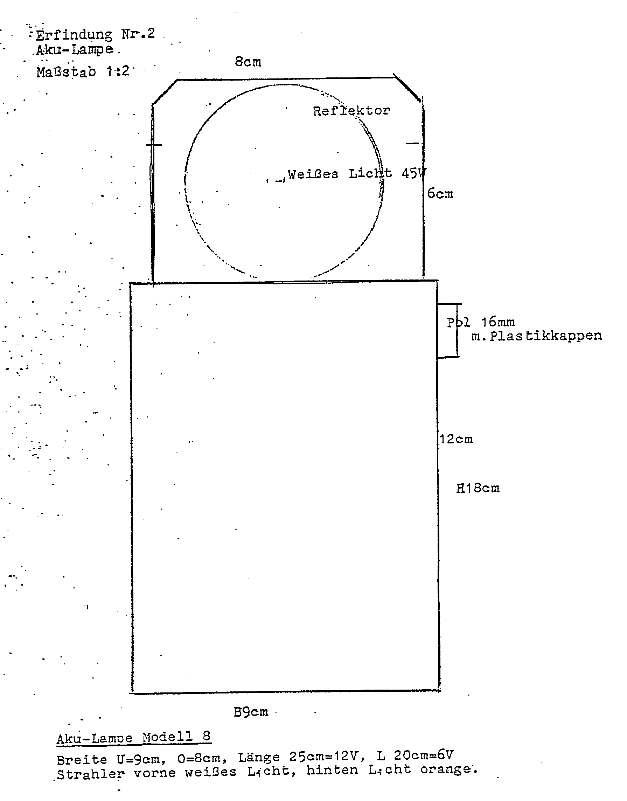

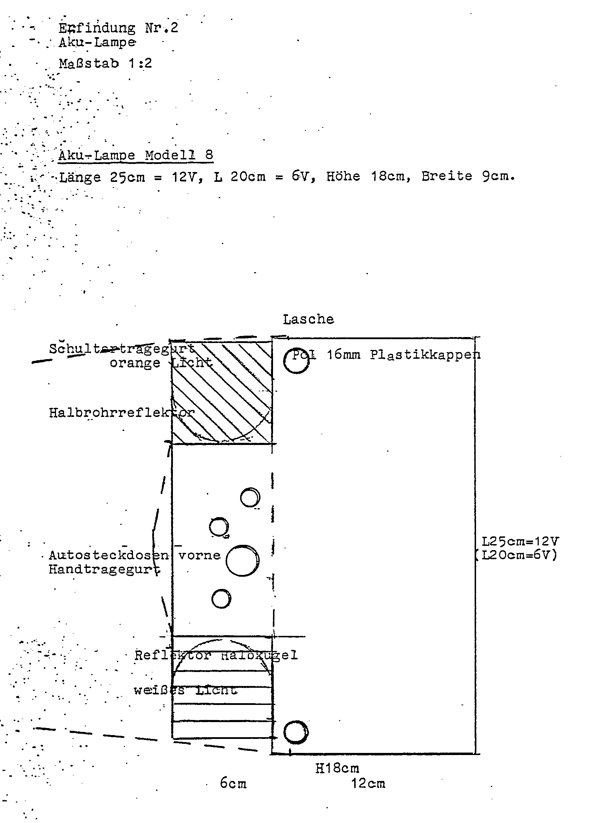

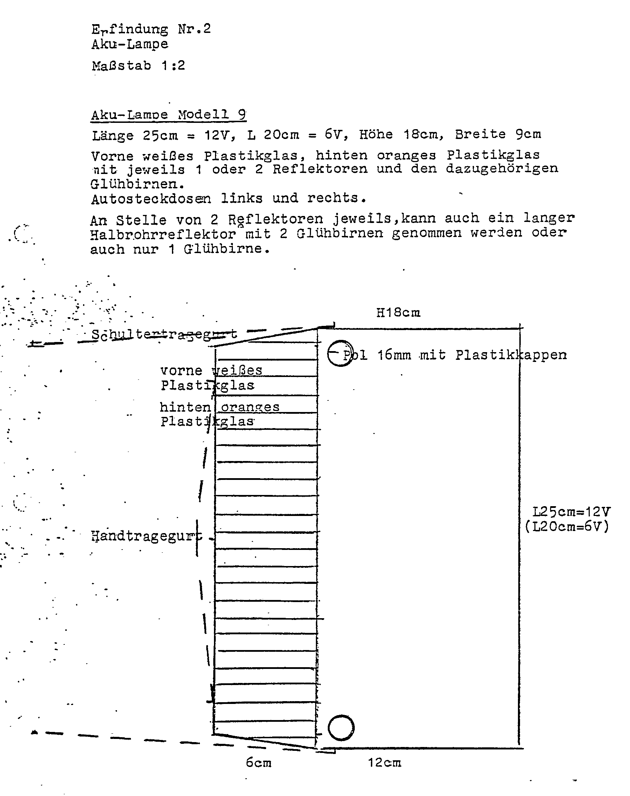

## Ansprüche

Der kennzeichnende Teil besteht aus
das Aku ist in einer Lampe integriert, Licht weiß/orange Blinklicht,
außerdem die Möglichkeit zur Verwendung von elektrischen Autozubehör,
vor allem als Notstartbatterie, für große Autos die größeren Varianten,
außerdem die größeren Varianten als Ersatz der Hauptbatterie in den Motorraum, dort befestigen,
auch als Energiequelle von 12V/6V Werkzeug verwendbar als Alternative von bisherigen kabellosen Akuwerkzeug,
als Energiequelle im Wochenendhaus z.B. Autostaubsauger 12V,
als Energiequelle für alle 12V Verbraucher,
ich empfehle eine Steckdose hierfür im Auto verlegen zu lassen, dam.der Zigarrettenanzünder frei ist.

außerdem die Verwendung von elektrischen Autolampen, Fernscheinwerfer usw..

/

Erfindung Nr.2
Aku-Lampe Modell Nr.10

Maßstab 1:1

Ca-Maße:  Länge 11cm, Breite 6cm, Höhe 11cm. (6V=L11cm,B3cm,H10cm)
Vorne Reflektor Durchmesser5,5cm umschaltbar weiß/orange
Blinklicht. 2 Pole Ø 10mm mit Plastikkappen.
Seitlich Autosteckdosen gr.u.kl..
Oben Schultertragegurt und umklappbarer Handtragegriff

H11cm

Schultertragegurt

Autosteckdosen
Aufladesteckd.

Handtragegriff

Pol    Lampe 30W orange

Reflektor

L11cm

Halogenlampe 65W /45W

Lampe 30W weiß

2

Erfindung. Nr.2
Aku-Lampe Modell 11

Maßstab 1:1

Ca.Maße: L11cm,B6cm,H11cm. (6V=L11cm,B3cm,H10cm)
Vorne R flecktor Durchmesser 8cm umschaltbar weiß/Orange
Blinklicht, 2 Pole Ø 10mm mit Plastikkappen.
Seitlich Autosteckdosen groß und klein.
Oben Schultertragegurt und umklappbarer Handtragegriff

H11cm

Autosteckdosen

Schultertragegurt

Aufladesteckd.

Pol

Handtragegriff

Reflektor

alternativ
1 kl.Reflektor 30mm 30W/45Wo.Halo
Halogenbirne 65W

L11cm

Lampe 30W weiß

3

Erfindung Nr.2
Aku-Lampe Modell 12

Maßstab 1:1

Ca-Maße: L11cm, B6cm, H11cm. (6V=L11cm, B3cm, H10cm)
Vorne Reflektor Durchmesser 9,5cm, umschaltbar wei/orange
Blinklicht, 2 Pole ⌀ 10mm mit Plastikkappen.
Seitlich Autosteckdosen gr.u.kl.
Oben Schultertragegurt und umklappbarer Handgriff

H11cm

Schultertragegurt

Autosteckdosen

Aufladesteckd.

Pol

Handtragegriff

Reflektor

Halogenbirne 75W

L11cm

Lampe weiß 30W

4

Erfindung Nr.2
Aku-Modell 13   Speziallampe für Autozubehör

Maßstab 1:1

Ca.-Maße: L11cm,B6cm,H11cm.   (6V=L11cm,B3cm,H10cm)
Vorne 1 weißes Licht 20/30W und 1 gelbes Blinklicht 20W,
2 Pole ⌀ 10mm mit Plastikkappen.
Seitlich Autosteckdosen gr.u.kl.
Oben Schultertragegurt und umklappbarer Handgriff.

H11cm

Autosteckdose

Schultertragegurt

Aufladesteckdose.

Pol

Blinklicht orange

Handtragegriff

L11cm

weißes Licht 30/20W.

6,8cm

7cm

Erfindung Nr.2
Aku-Lampe

Maßstab 1:1

Reflektor

×

8cm

4cm

9cm

Pol

12cm

9cm

<u>Aku-Lampe Modell 1, 3, 4, 6</u>

Vorne weißes Licht, hinten oranges Licht
die beiden Pole mit Plastikkappen abgedeckt.

6

Erfindung Nr.2
Aku-Lampe
Maßstab 1:2

Aku-Lampe Modell 1

Länge 25cm = 12V    20cm = 6V    Höhe 23cm

Auto-
Steckdosen etc.    H23cm
— orange Licht        Auflagesteckdose

8    Pole 16mm
m.Plastikkappen

Reflektor        Farbfilter 3 Farben

60W Halogenbirne        L25cm
(L20cm6V)
Handtragegurt

30W Birne
Reflektor
— Schultertragegurt

Laschen

Aku-Lampe Modell 2    Vorderansicht

Epfindung Nr.2
Aku-Lampe

6 cm

12 cm

-- Schultertragegurt

Pole 16mm
mit Platikkappen

Reflektor

Breite 20cm

Handtragegurt

weiße Glühbirne

rote Glühbirne   o.orange

Lasche
2x f.Gurte

EP 0 331 790 A2

Erfindung Nr.2
Aku-Lampe
Maßstab 1:1

6,8cm

2cm

8cm

Autosteckdosen gr.u.kl.

4cm

9cm

12cm

9cm

Aku-Lampe Modell 2:

Breite: U=9cm, O=6,8cm, Länge 20cm o. 25cm, Höhe 18cm.
Strahler weiße Birne 6mm, orang.Birne 5mm o.rote.

20cm = 6V, 25cm = 12V

Erfindung Nr.2
Aku-Lampe

Maßstab 1:2

Aku-Lampe Modell 3  Seitenansicht
Breite U=9cm, O=6,8cm, Länge 25cm=12V, Länge 20cm=6V.
Strahler hochklappbar, umschaltbar auf orange/weiß

Reflektor
orange    H16cm

Schultertragegurt        Pol 16mmØ

Traggriff

Autosteckdosen auf
Rückseite

L25cm=12V
(L20cm=6V)

Strahler umklappbar

10

Erfindung Nr.2
Aku-Lampe
Maßstab 1:2

Aku-Lampe Modell 4   Seitenansicht
Breite U=9cm, O=6,8cm, Länge 25cm=12V, Länge 20cm=6V
Strahler hochklappbar, umschaltbar auf orange/weiß

H16cm

Schultergurt

Pol

L25cm=12V
(L20cm=6V)

Strahler umklappbar

Schultertragegurt

Erfindung Nr.2
Aku-Lampe

Maßstab 1:1

B8cm

4cm

Reflektor

Pol  16mmØ

12cm

B9cm

Aku-Lampe Modell 5

Breite  U=9cm, O=8cm, Länge 25cm=12V, Länge 20cm=6V
Strahler umschaltbar auf orange/weiß
oder hinten orange Reflektor m.Blinklicht, dann Steckdosen
seitlich links bei Zeichnung oben, sonst hinten oben.

Erfindung Nr.2
Aku-Lampe
Maßstab 1:2

Aku-Lampe Modell 6
Länge 25cm = 12V, Länge 20cm = 6V, Höhe 23cm, Breite 9cm.

Auto-
Steckdosen etc.                    H23cm

orange Licht                       Pol 16mm
                                   m.Plastikkappen

Neonstab 12V/6V

Reflektor                          L25cm
                                   (L20cm6V)
Handtrage-
Gurt

                    weißes Licht

Schultertragegurt

                    12cm

13

Erfindung Nr.2
Aku-Lampe

Maßstab 1:2

Aku-Lampe Modell 7

Länge 25cm = 12V, Länge 2ocm = 6V, Höhe 16cm, Breite 9cm.

orange Licht        Pol 16mm

Halbrohrreflektor
Sofittenlampe 20W

Handtragegurt                                L25cm(L20cm=6V)

X    Autosteckdosen gr.u.kl.
     auf Rückseite oben

Sofittenlampe 20W o. 30W Sockelbirne
Halbrohrreflektor o. Rundrefl.

weißes Licht

Schultertragegurt
                    4cm           12cm

Erfindung Nr.2
Aku-Lampe
Maßstab 1:2

8cm

Reflektor

Weißes Licht 45W

6cm

Pol 16mm
m. Plastikkappen

12cm

H18cm

B9cm

Aku-Lampe Modell 8

Breite U=9cm, O=8cm, Länge 25cm=12V, L 20cm=6V
Strahler vorne weißes Licht, hinten Licht orange.

*15*

g

Erfindung Nr.2
Aku-Lampe
Maßstab 1:2

Aku-Lampe Modell 8
Länge 25cm = 12V, L 20cm = 6V, Höhe 18cm, Breite 9cm.

Lasche

Schultertragegurt
orange Licht

Pol 16mm Plastikkappen

Halbrohrreflektor

L25cm=12V
(L20cm=6V)

Autosteckdosen vorne
Handtragegurt

Reflektor Halokugel

weißes Licht

H18cm
6cm        12cm

16

Erfindung Nr.2
Aku-Lampe

Maßstab 1:2


Aku-Lampe Modell 9

Länge 25cm = 12V, L 20cm = 6V, Höhe 18cm, Breite 9cm

Vorne weißes Plastikglas, hinten oranges Plastikglas
mit jeweils 1 oder 2 Reflektoren und den dazugehörigen
Glühbirnen.
Autosteckdosen links und rechts.

An Stelle von 2 Reflektoren jeweils,kann auch ein langer
Halbrohrreflektor mit 2 Glühbirnen genommen werden oder
auch nur 1 Glühbirne.

H18cm

Schultertragegurt

Pol 16mm mit Plastikkappen

vorne weißes
Plastikglas

hinten oranges
Plastikglas

L25cm=12V
(L20cm=6V)

Handtragegurt

6cm          12cm